(19) Europäisches Patentamt
European Patent Office
Office européen des brevets

(11) Veröffentlichungsnummer : **0 047 972**
**B1**

# (12) EUROPÄISCHE PATENTSCHRIFT

(45) Veröffentlichungstag der Patentschrift : **30.10.85**

(21) Anmeldenummer : **81107070.5**

(22) Anmeldetag : **09.09.81**

(51) Int. Cl.⁴ : **A 01 N 35/06**, A 01 N 37/44, A 01 N 39/00, A 01 N 39/02, A 01 N 41/10, A 01 N 43/40, A 01 N 43/60, A 01 N 43/64, A 01 N 43/74

(54) **Erhöhung der Kohlehydrat-Einlagerung in Pflanzen mittels substituierten Phenoxyalkansäure- und Cyclohexandionderivaten.**

(30) Priorität : **16.09.80 DE 3034845**

(43) Veröffentlichungstag der Anmeldung : **24.03.82 Patentblatt 82/12**

(45) Bekanntmachung des Hinweises auf die Patenterteilung : **30.10.85 Patentblatt 85/44**

(84) Benannte Vertragsstaaten : **DE FR IT SE**

(56) Entgegenhaltungen :
**EP-A- 0 008 624**
**Proceedings European Weed Research Society Symposium; p. 430-437 (1975)**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Bieringer, Hermann, Dr.**
**Eichenweg 26**
**D-6239 Eppstein/Taunus (DE)**
Erfinder : **Bürstell, Helmut, Dr.**
**Hohlacker 65**
**D-6000 Frankfurt am Main 50 (DE)**
Erfinder : **Handte, Reinhard, Dr.**
**Breckenheimer Strasse 45**
**D-6238 Hofheim am Taunus (DE)**
Erfinder : **Köcher, Helmut, Dr.**
**Kleiststrasse 9**
**D-6238 Hofheim am Taunus (DE)**
Erfinder : **Schulze, Ernst-Friedrich, Dr.**
**Lerchenweg 26**
**D-6238 Hofheim am Taunus (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1.) Europäisches Patentübereinkommen).

Jouve, 18, rue St-Denis, 75001 Paris, France

**Beschreibung**

Es ist bekannt, daß zahlreiche Verbindungen aus den Klassen der aromatisch oder heterocyclisch substituierten Phenoxyalkansäure- und Cyclohexandionderivate eine starke selektive Wirksamkeit gegen annuelle und perennierende monokotyle Pflanzen aufweisen. Verschiedene dieser Verbindungen haben in jüngster Zeit Bedeutung als Herbizide gewonnen. Beispiele für solche Substanzen sind in den DE-A-22 23 894, 24 17 487, 24 33 067, 25 31 643, 26 49 706, 26 17 804, 26 23 558, 26 28 384, 26 40 730, 27 58 002, 28 22 304, 29 14 300, 29 21 567, 29 05 458, 29 21 567 und 28 30 066, 30 04 770 ; EP-A-000 2246, 002 1453, 000 3114, 001 8080, 000 8624 und 000 3890 ; Jap.-A-54-122 728, 54-109 935 und 54-055 534 ; US-A-4 192 669, 3 950 420, 4 011 256 und BE-A-875 889 beschrieben.

Aus « Proceedings European Weed Research Society, Symposium Status and Control of Grass Weeds in Europe », S. 430-437 (1975) ist bekannt, daß die verwandten Verbindungen Methyl-2-[4-(4-Chlorphenoxy)-phenoxy]-propionat und Methyl-2-[4-(2,4-Dichlorphenoxy)-phenoxy]-propionat in einem sehr frühen Wachstumsstadium zu einer Zuckerbildung in Mais führt, die allerdings mit einer schweren Blattschädigung einhergeht.

Es wurde nun gefunden, daß eine Anzahl von Verbindungen des obigen Strukturtyps überraschend eine verstärkte Kohlenhydrateinlagerung und damit eine Erhöhung des Zucker- und Stärkegehalts bei zahlreichen mono- und dikotylen Pflanzen bewirkt, wenn man sie in subtoxischen Konzentrationen anwendet.

Daß bei manchen Herbiziden die Anwendung in niedrigen Konzentrationen kurz vor der Ernte zu einer verstärkten Bildung erwünschter Pflanzeninhaltstoffe wie z. B. der Kohlehydrate führt, ist nicht neu. Dieses Phänomen läßt sich allgemein auf eine durch das Herbizid bewirkte Umsteuerung des pflanzlichen Metabolismus zurückführen. Im Verlauf dieses Prozesses, der mitunter einer Verzögerung des vegetativen Wachstums einhergeht, kann es zu einer verstärkten Einlagerung von Zucker, Stärke und anderer wichtiger Stoffwechselprodukte kommen.

Beispiele für Verbindungen, die diese Eigenschaften besitzen, sind z. B. in US-PS 3 556 762, DE-AS 25 28 867 und DE-OS 25 57 139 offenbart. Von substituierten Phenoxy-alkansäure- und Cyclohexandionderivaten sind derartige Wirkungen bisher nicht bekannt.

Gegenstand der vorliegenden Erfindung ist somit ein Verfahren zur Erhöhung des Kohlehydratgehalts von Pflanzen, dadurch gekennzeichnet, daß man auf die Pflanzen eine wirksame Menge einer Verbindung der Formel I

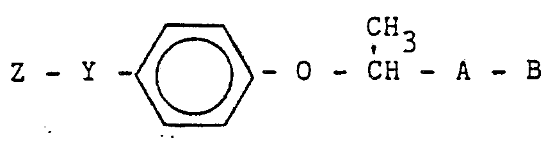 (I)

eine Woche bis 5 Monate vor der Ernte einwirken läßt.

In den Formeln I und II bedeuten

Z einen Rest der Formel

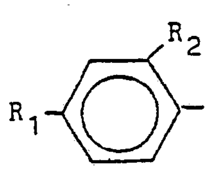 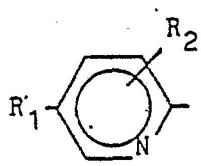 , 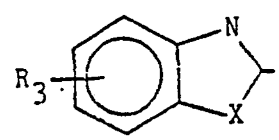 oder

(III) (IV) (V)

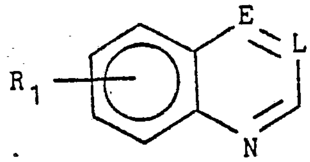

(VI)

Y Sauerstoff $—CH_2—$, —NH oder $—N—(C_1\text{-}C_4)$-Alkyl,

A eine direkte Bindung oder die Gruppen $—CH_2—CH_2—$ oder —CH = CH—,

B einen Rest der Formel

$-COOR_4$, $-COSR_5$, 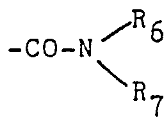 oder 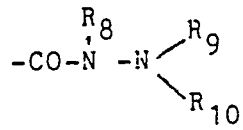 ,

X Sauerstoff oder Schwefel,

E CH, N, 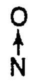

L CH, N,

$R_1$ Halogen, $CF_3$, $CF_2H$, $OCF_3$, CN oder $NO_2$,

$R_2$ Wasserstoff, F, Cl, $CF_3$, CN oder $NO_2$,

$R_3$ Wasserstoff, F, Cl, Br oder $CF_3$,

$R_4$ Wasserstoff oder einen aliphatischen, cycloaliphatischen, aromatischen oder heteroaromatischen Rest,

$R_5$ $(C_1\text{-}C_6)$Alkyl, $(C_3\text{-}C_6)$Alkenyl, Benzyl, Phenyl, Chlorphenyl oder einen Rest der Formel

$$—CH(R_8)—COOR_{11}$$

$R_6$ Wasserstoff oder $(C_1\text{-}C_4)$Alkyl,

$R_7$ Wasserstoff, $(C_1\text{-}C_{10})$Alkyl, Phenyl das auch ein- oder zweifach durch Cl und/oder $CH_3$ substituiert sein kann, oder einen Rest der Formel $—CH(R_8)—COOR_{11}$,

$R_6$ und $R_7$ gemeinsam mit dem Stickstoffatom einen Pyrrolidin-, Piperidin- oder Morpholinring,

$R_8$ Wasserstoff oder $CH_3$,

$R_9$ und $R_{10}$ Wasserstoff oder $(C_1\text{-}C_4)$Alkyl, ferner $R_9$ auch Phenyl,

$R_{11}$ Wasserstoff, $(C_1\text{-}C_4)$Alkyl oder ein Kationäquivalent einer anorganischen oder organischen Säure bedeuten, mit der Maßgabe, daß $R_1$ in Formel III nicht Halogen bedeutet, sowie ihre Salze mit anorganischen oder organischen Basen oder deren Hydrate.

Hier und im folgenden können Alkyl- und Alkenylreste geradkettig oder verzweigt sein. « Halogen » steht für Fluor, Chlor oder Brom. Als salzbildende Kationen kommen in erster Linie Alkali-($Na^+$, $K^+$) und Ammonium-Kationen in Betracht, außerdem z. B. Erdalkali-Kationäquivalente (1/2 $Ca^{++}$, 1/2 $Mg^{++}$) oder Kationen organischer Ammoniumbasen wie $^+NH(C_2H_5)$, $^+NH_2(C_2H_5)_2$, $^+NH_3C_2H_5$, $^+N(C_2H_5)_4$, $^+NH(CH_3)_3$, $^+NH_3CH_2CH_2OH$, $^+NH_2(CH_2CH_2OH)_2$ oder $^+NH(CH_2CH_2OH)_3$.

Als Reste $R_4$ kommen grundsätzlich alle in Frage, deren Hydroxyderivate (ROH) zur Esterbildung mit den freien Säuren der Verbindung I befähigt sind.

Beispielsweise kann $R_4$ folgende Bedeutung annehmen :

$(C_1\text{-}C_{12})$-Alkyl, das gegebenenfalls durch 1-3 Halogen, vorzugsweise F, Cl, Br und/oder OH, $(C_1\text{-}C_6)$-Alkoxy, $(C_1\text{-}C_4)$-Alkylthio, $(C_1\text{-}C_6)$-Alkoxy-$(C_2\text{-}C_6)$-alkoxy, Halogen-$(C_1\text{-}C_2)$-alkoxy, Methoxyäthoxyäthoxy, $(C_1\text{-}C_4)$-Alkylamino, Di$(C_1\text{-}C_4)$-alkylamino, CN, $(C_1\text{-}C_4)$-Sulfonyl, $(C_1\text{-}C_4)$-Sulfoxyl, $(C_1\text{-}C_4)$Alkylcarbonylamino, Phenyl, Oxiranyl, und/oder Phenoxy substituiert ist, wobei letzteres ebenfalls ein- bis zweifach durch Halogen oder $(C_1\text{-}C_4)$-Alkyl substituiert sein kann ;

$(C_5\text{-}C_6)$-Cycloalkyl, das gegebenenfalls durch Halogen oder $CH_3$ substituiert ist ;

$(C_3\text{-}C_6)$-Alkenyl, Halogen-$(C_3\text{-}C_6)$-alkenyl ;

$(C_5\text{-}C_6)$-Cycloalkenyl ;

$(C_3\text{-}C_4)$-Alkinyl, das gegebenenfalls ein- oder zweifach durch $(C_1\text{-}C_6)$-Alkyl, Phenyl, Halogen oder $(C_1\text{-}C_2)$-Alkoxy substituiert ist ;

Phenyl, das gegebenenfalls ein- bis dreifach druch $(C_1\text{-}C_4)$-Alkyl, $(C_1\text{-}C_4)$-Alkoxy, Halogen, $NO_2$ oder $CF_3$ substituiert ist ;

Furfuryl, Tetrahydrofurfuryl oder ein Rest der Formel

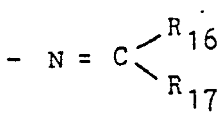 , 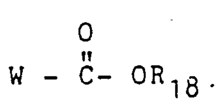 oder 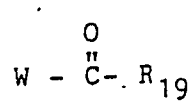

wobei

$R_{16}$ : H, $(C_1\text{-}C_4)$-Alkyl,

$R_{17}$ : H, $(C_1\text{-}C_4)$-Alkyl, $(C_2\text{-}C_6)$-Alkenyl, $(C_2\text{-}C_6)$-Alkinyl oder Phenyl,

oder beide gemeinsam eine Pentamethylenkette bilden,

W : $(C_1\text{-}C_3)$-Alkylen, das gegebenenfalls ein- oder zweifach durch $(C_1\text{-}C_4)$-Alkyl, $—COCH_3$, $COOR_{13}$ substituiert ist,

$R_{18}$ : H, $(C_1\text{-}C_4)$-Alkyl oder ein Kationäquivalent einer organischen oder anorganischen Base, und

$R_{19}$ : $(C_1\text{-}C_4)$-Alkyl

sind.

Unter den Verbindungen der Formel I sind solche bevorzugt, in denen B für die Gruppe $—COOR_4$ steht ; unter diesen wiederum solche, in denen Y Sauerstoff und A eine direkte Bindung darstellt.

Besonders geeignet sind Verbindungen der Formel I, in denen $R_1$ Fluor, Chlor, Brom oder $CF_3$ und $R_2$ Wasserstoff oder Chlor oder in denen Z den Rest der Formel V bedeutet.

Die Verbindungen der Formel I und II können als Racemate oder optische Isomere vorliegen. Für den erfindungsgemäßen Zweck kommen sowohl die optisch inaktiven als auch die optisch aktiven D-Formen der Verbindungen in Frage.

Als Beispiel für Verbindungen der Formel I seien folgende genannt :

2-[4-(6-Chlor-2-benzoxazolyloxy)-phenoxy]-propionsäure-($C_1$-$C_4$)alkylester,
2-[4-(6-Chlor-2-benzthiazolyloxy)-phenoxy]-propionsäure-($C_1$-$C_4$)alkylester,
2-[4-(6-Fluor-2-benzoxazolyloxy)-phenoxy]-propionsäure-($C_1$-$C_4$)alkylester,
2-[4-(6-Trifluormethyl-2-benzthiazolyloxy)-phenoxy]-propionsäure($C_1$-$C_4$)alkylester,
2-[4-(4-Trifluormethylphenoxy)-phenoxy]-propionsäure($C_1$-$C_4$)-alkylester,
2-[4-(4-Trifluormethylphenoxy)-phenoxy]-acetonoximester,
2-[4-(3,5-Dichlor-2-pyridyloxy)-phenoxy]-propionsäure-($C_1$-$C_4$)alkylester.
2-[4-(5-Trifluormethyl-2-pyridyloxy)-phenoxy]-propionsäure-($C_1$-$C_4$)alkylester,
2-[4-(6-Fluor-2-benzthiazolyloxy)-phenoxy]-propionsäure-($C_1$-$C_4$)alkylester,
2-[4-(6-Brom-2-benzthiazolyloxy)-phenoxy]-propionsäure-($C_1$-$C_4$)alkylester,
2-[4-(6-Chlor-2-chinolinoxy)-phenoxy]-propionsäure($C_1$-$C_4$)-alkylester,
2-[4-(6-Chlor-2-chinazolinyloxy)-phenoxy]-propionsäure-($C_1$-$C_4$)alkylester,

sowie deren Natriumsalze.

Durch die erfindungsgemäße Anwendung der genannten Verbindungen kann bei einer Vielzahl von mono- und dikotylen Pflanzen oder deren Früchten der Kohlehydratanteil erhöht werden. Genannt seien z. B. Zuckerrohr, Zuckerrüben, Weintrauben, Melonen, Obst, Kartoffeln, Mais, Hirsen (Sorghum) und Grünfutter (Klee, Luzerne). Die Folge ist bei Zuckerrohr, Zuckerrüben und Hirsen ein Anstieg des Saccharosegehalts, bei Obst und Weintrauben z. B. ein Anstieg des Fruchtzuckergehalts ; bei anderen Pflanzen nimmt der Stärkegehalt zu. Die damit erzielten Vorteile sind offenkundig und bedürfen keiner Erläuterung.

Im Gegensatz zur Anwendung als Herbizide erfolgt die erfindungsgemäße Anwendung zur Beeinflussung der Kohlehydrateinlagerung in einem späteren Stadium des Pflanzenwachstums. Zu dieser Zeit ist die Pflanze gegen herbizide Einflüsse wesentlich unempfindlicher als im Stadium des Auflaufens, so daß auch höhere Dosierungen schadlos vertragen werden. Zweckmäßig werden die Wirkstoffe eine Woche bis 5 Monate vor der Ernte angewendet. Nach Ablauf dieser Zeit hat der durch die Wirkstoffe hervorgerufene Reifungsgrad und damit auch der Kohlehydratgehalt ein Maximum erreicht. Allgemein ist zu beachten, daß bei den Kulturen die Wachstumsgeschwindigkeit und Vegetationsdauer innerhalb beträchtlicher Grenzen variieren kann. Zuckerrohr z. B. benötigt je nach Standort und Klima 1-3 Jahre bis zur Erntereife. Entsprechend muß auch der Anwendungszeitpunkt variiert werden. Bei Zuckerrohr und Zuckerhirse kann dieser z. B. 1 bis 13 Wochen vor der Ernte liegen.

Die Wirkstoffe der Formel I können in Form benetzbarer Pulver, emulgierbarer Konzentrate, versprühbarer Lösungen, Stäubemittel oder Granulate in den üblichen Zubereitungen angewendet werden. Diese Zubereitungen können je nach Art die Wirkstoffe in Konzentrationen von 2-95 % enthalten.

Benetzbare Pulver sind in Wasser gleichmäßig dispergierbare Präparate, die neben dem Wirkstoff außer einem Verdünnungs- oder Inertstoff noch Netzmittel, z. B. polyoxethylierte Alkylphenole, polyoxethylierte Oleyl-, Stearylamine, Alkyl- oder Alkylphenyl-sulfonate und Dispergiermittel, z. B. ligninsulfonsaures Natrium, 2,2'-dinaphthylmethan-6,6'-disulfonsaures Natrium oder auch oleylmethyltaurinsaures Natrium enthalten.

Emulgierbare Konzentrate werden durch Auflösen des Wirkstoffes in einem organischen Lösungsmittel, z. B. Butanol, Cylohexan, Dimethylformamid, Xylol oder auch höhersiedenden Aromaten und Zusatz eines nichtionischen Netzmittels, beispielsweise eines polyoxyethylierten Alkylphenols oder eines polyoxyethylierten Oleyl- oder Stearylamins, erhalten.

Stäubemittel erhält man durch Vermahlen des Wirkstoffes mit fein verteilten, festen Stoffen, z. B. Talkum, natürlichen Tonen, wie Kaolin, Bentonit, Pyrophillit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen auf die Oberfläche von Trägerstoffen, wie Sand, Kaolinite oder von granuliertem Inertmaterial. Auch können geeignete Wirkstoffe in der für die Herstellung von Düngemitellgranalien üblichen Weise hergestellt werden.

Die Wirkstoffkonzentrationen können in den handelsüblichen Konzentrationen innerhalb weiter Grenzen variieren. In benetzbaren Pulvern variiert die Wirkstoffkonzentration z. B. zwischen etwa 10 % und 95 %, der Rest besteht aus den oben angegebenen Formulierungszusätzen. Bei emulgierbaren Konzentraten ist die Wirkstoffkonzentration etwa 10 % bis 80 %. Staubförmige Formulierungen enthalten meistens 5 % bis 20 % an Wirkstoff. Bei Granulaten hängt der Wirkstoffgehalt z. T. davon ab, ob die wirksame Verbindung flüssig oder fest vorliegt und welche Granulierhilfsmittel, Füllstoffe usw. verwendet werden.

Zur Anwendung werden die handelsüblichen Konzentrate gegebenenfalls in üblicher Weise verdünnt, z. B. bei benetzbaren Pulvern und emulgierbaren Konzentraten mittels Wasser. Staubförmige und granulierte Zubereitungen sowie versprühbare Lösungen werden vor der Anwendung nicht mehr mit weiteren inerten Stoffen verdünnt.

Die erforderliche Aufwandmenge variiert mit den äußeren Bedingungen wie Temperatur, Feuchtigkeit u.a. und hängt insbesondere von der behandelten Pflanzenart und ihrem Entwicklungsstadium ab. Grundsätzlich ist sie so zu wählen, daß der Wirkstoff in den natürlichen Wachstumsprozeß der Pflanze eingreift, ohne sie zu schädigen. Je nach Pflanze kann sie daher innerhalb weiter Grenzen schwanken, z. B. zwischen 0,005 und 10,0 kg Wirkstoff/ha oder mehr. Bei breitblättrigen Pflanzen, die von den Verbindungen der Formel I und II wenig oder gar nicht geschädigt werden, liegt sie vorzugsweise im Bereich zwischen 0,1 und 5, insbesondere zwischen 0,5 und 2 kg/ha während bei monokotylen Pflanzen im allgemeinen niedrigere Konzentrationen (0,01-1 kg/ha) zur Anwendung kommen.

Die Mittel können gewünschtenfalls mit anderen Herbiziden, Insektiziden und Fungiziden kombiniert werden.

## Formulierungsbeispiele

### Beispiel A

Ein emulgierbares Konzentrat wird erhalten aus
15 Gew.-Teilen Wirkstoff
75 Gew.-Teilen Cyclohexanon als Lösungsmittel und
10 Gew.-Teilen oxethyliertes Nonylphenol (10 AeO) als Emulgator.

### Beispiel B

Ein in Wasser leicht dispergierbares benetzbares Pulver wird erhalten, indem man
25 Gew.-Teile Wirkstoff
64 Gew.-Teile kaolinhaltiges Quarz als Inertstoff
10 Gew.-Teile ligninsulfonsaures Kalium und
1 Gew.-Teil oleylmethyltaurinsaures Natrium als Netz- und Dispergiermittel
mischt und in einer Stiftmühle mahlt.

### Beispiel C

Ein Stäubemittel wird erhalten, indem man
10 Gew.-Teile Wirkstoff und
90 Gew.-Teile Talkum als Inertstoff
mischt und in einer Stiftmühle zerkleinert.

### Beispiel D

Ein Granulat besteht z. B. aus etwa
2-15 Gew.-Teilen Wirkstoff
98-85 Gew.-Teilen inerten Granulatmaterialien, wie z. B. Attapulgit, Bimsstein und Quarzsand.

## Biologische Beispiele

In den nachfolgenden Beispielen wird das erfindungsgemäße Verfahren an der Steigerung des Saccharosegehalts dargestellt, ohne daß damit die Möglichkeit weiterer Anwendungen ausgeschlossen werden soll.

### Beispiel 1

#### Untersuchungsverfahren

Zuckerrohrpflanzen werden unter Gewächshausbedingungen bei 25 °C-35 °C und ca. 65 % Luftfeuchtigkeit angezogen. Unterschiedliche Mengen der formulierten Mittel wurden in Wasser suspendiert, daß zusätzlich etwa 0,25 Gew.-% eines oberflächenaktiven Mittels (Nonylphenol) enthielt.

Jeweils 0,3 ml der Suspensionen wurden mit Hilfe einer Spritze in den Spindelbereich in Höhe der letzten sichtbaren Blattspreite (« dewlap ») appliziert (10 Pflanzen pro Konzentration). Von den behandelten Pflanzen sowie von den nicht behandelten Kontrollen wurden nach 3 Wochen bei der Ernte die Blätter entfernt und die Internodien gruppenweise auf ihren Saccharosegehalt analysiert. Die Ergebnisse sind in Tabelle 1 dargestellt.

Tabelle I

| Wirkstoff | | Zuckergehalt (%) bei der Ernte |
|---|---|---|
| Kontrolle | | 100 |
| Verb. I | 4 mg | 182 |
| | 2 mg | 184 |
| Verb. II | 4 mg | 160 |
| | 2 mg | 176 |
| Verb. III | 4 mg | 177 |
| | 2 mg | 159 |
| Verb. IV | 4 mg | 169 |
| | 2 mg | 162 |
| Verb. V | 8 mg | 151 |
| Verb. VI | 8 mg | 154 |
| | 4 mg | 145 |

Schlüssel

I : (D +)-Ethyl-2-[4-(6-chlor-2-benzoxazolyloxy)-phenoxy]-propanoat
II : Ethyl-2-[4-(6-chlor-2-benzthiazolyloxy)-phenoxy]-propanoat
III : Racemat von I
IV : Propyl-2-[4-(6-chlor-2-benzoxazolyloxy)-phenoxy]-propanoat
V : Ethyl-2-[4-(6-chlor-2-chinoxalinyloxy)-phenoxy]-propanoat
VI : Ethyl-2-[4-(6-chlor-2-chinolinyloxy)-phenoxy]-propanoat

Beispiel II

Die formulierten Wirkstoffe werden wie unter Beispiel I beschrieben in Wasser mit einem Zusatz von 0,25 Gew.-% eines oberflächenchenaktiven Mittels suspendiert. Je Präparat und Konzentration wurden 0,3 ml einer Präparatesuspension in die Spindel von jeweils 10 Zuckerrohrpflanzen gegeben. Das Alter der Pflanzen betrug zum Zeitpunkt der Applikation 18 Monate.

Nach 5 Wochen wurden die Pflanzen geerntet, das Blattwerk entfernt und die 14 oberen Internodien gruppenweise jeweils zusammen im Hinblick auf Saccharosegehalt und Saftreinheit mittels der sog. « press method » [T. Tanimoto, Hawaiian Planters Record, 57, 133 (1964)] analysiert.

Dabei wird der Zuckergehalt polarimetrisch bestimmt und in « Pol Prozent Rohr » ausgedrückt ; diese Zahl entspricht dem Prozentsatz Saccharose in der Lösung unter der Annahme, daß Saccharose die einzige Substanz inder Zuckerlösung ist, die die Ebene des polarisierten Lichts dreht. Die Bestimmung der « Pol % Rohr » ist ein anerkanntes Verfahren zur Bestimmung des Zuckergehaltes von Zuckerrohr.

Tabelle II

| | Aufwandmenge | Saftreinheit [%] | Saccharosegehalt [Pol % Rohr] |
|---|---|---|---|
| Kontrolle | 0 | 78,3 | 10,1 |
| Verb. I | 4 mg | 89,2 | 15,9 |
| | 2 mg | 90,0 | 16,2 |
| Verb. II | 4 mg | 87,8 | 15,1 |
| | 2 mg | 89,6 | 15,9 |
| Verb. III | 4 mg | 88,2 | 15,7 |
| | 2 mg | 88,1 | 15,7 |
| Verb. IV | 4 mg | 89,1 | 16,1 |
| | 2 mg | 83,3 | 12,1 |

Beispiel III

Zuckerrüben wurden auf sandigem Lehmboden in Töpfen bei hohen Stickstoffgaben im Gewächshaus angezogen. Im Alter von 14 Wochen wurden die Pflanzen mit dem Wirkstoff II in einer Aufwandmenge von 1,25 kg/ha beansprucht. Die Pflanzen wurden 5 Wochen nach der Behandlung geerntet und auf ihren Zuckergehalt untersucht. Die Ergebnisse sind in Tabelle 3 als Prozentzahlen im Vergleich zur Kontrolle dargestellt.

Tabelle 3

| | Rübenkörper | Zuckerertrag |
|---|---|---|
| Kontrolle | 100 | 100 |
| Verb. II | 112 | 124,2 |

Aus den Versuchsergebnissen wird deutlich sichtbar, daß das erfindungsgemäße Verfahren bei den behandelten Pflanzen eine beachtliche Steigerung des Saccharosegehaltes und der Saccharoseausbeute bewirkt.

Die Erfindung wurde hier in Bezug auf bestimmte Ausführungsformen beschrieben, ohne das die Erfindung dadurch eingeschränkt werden soll. Ähnliche Effekte lassen sich beobachten, wenn man andere erfindungsgemäße Mittel einsetzt.

**Patentansprüche**

1. Verfahren zur Erhöhung des Kohlehydratgehalts von Pflanzen, dadurch gekennzeichnet, daß man auf die Pflanzen eine wirksame Menge eines Wirkstoffes der Formel I

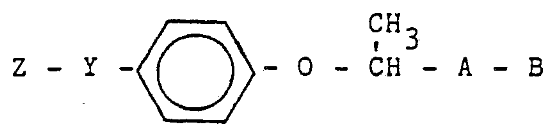

(I)

eine Woche bis 5 Monate vor der Ernte einwirken läßt, wobei in den Formeln

Z einen Rest der Formel

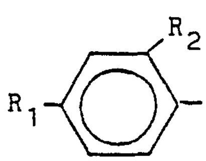

(III)

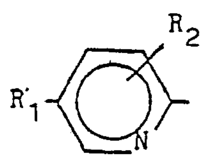

(IV)

,

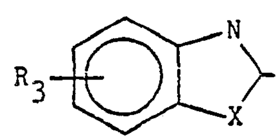

oder

(V)

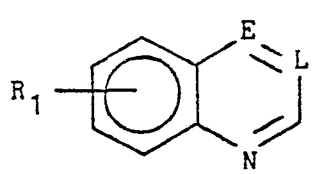

(VI)

Y Sauerstoff, $—CH_2—$, —NH oder —N—($C_1$-$C_4$)-alkyl,

A eine direkte Bindung oder die Gruppen $—CH_2—CH_2—$ oder —CH = CH—,

B einen Rest der Formel

$-COOR_4$, $-COSR_5$, 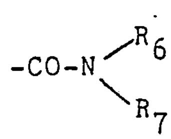 oder 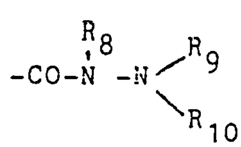

X Sauerstoff oder Schwefel,

E CH, N, $N \rightarrow O$,

L CH, N,

$R_1$ Halogen, $CF_3$, $CF_2H$, $OCF_3$, CN oder $NO_2$,

$R_2$ Wasserstoff, F, Cl, $CF_3$, CN oder $NO_2$,

$R_3$ Wasserstoff, F, Cl, Br oder $CF_3$,

$R_4$ Wasserstoff, einen aliphatischen, cycloaliphatischen, aromatischen oder heteroaromatischen Rest,

$R_5$ $(C_1$-$C_6)$Alkyl, $(C_3$-$C_6)$Alkenyl, Benzyl Phenyl, Chlorphenyl oder einen Rest der Formel

$$—CH(R_8)—COOR_{11}$$

$R_6$ Wasserstoff oder $(C_1$-$C_4)$Alkyl,

$R_7$ Wasserstoff, $(C_1$-$C_{10})$Alkyl, Phenyl das auch ein- oder zweifach durch Cl und/oder $CH_3$ substituiert sein kann, oder einen Rest der Formel

$$—CH(R_8)—COOR_{11},$$

$R_6$ und $R_7$ gemeinsam mit dem Stickstoffatom einen Pyrrolidin-, Piperidin- oder Morpholinring,

$R_8$ Wasserstoff oder $CH_3$,

$R_9$ und $R_{10}$ Wasserstoff oder $(C_1$-$C_4)$Alkyl, ferner $R_9$ auch Phenyl,

$R_{11}$ Wasserstoff, $(C_1$-$C_4)$Alkyl oder ein Kationäquivalent einer anorganischen oder organischen Säure bedeuten, mit der Maßgabe, daß $R_1$ in Formel III nicht Halogen bedeutet, sowie deren Salze mit anorganischen oder organischen Basen oder deren Hydrate.

2. Verfahren gemäß Anspruch 1, dadurch gekennzeichnet, daß man auf die Pflanzen eine wirksame Menge eines Wirkstoffes gemäß Anspruch 1 einwirken läßt, wobei Z, $R_1$-$R_3$ und $R_5$-$R_{11}$ die genannten Bedeutungen haben und $R_4$ $(C_1$-$C_{12})$-Alkyl, das gegebenenfalls durch 1-3 Halogen, vorzugsweise F, Cl, Br und/oder OH, $(C_1$-$C_6)$-Alkoxy, $(C_1$-$C_4)$-Alkylthio, $(C_1$-$C_6)$-Alkoxy-$(C_2$-$C_6)$-alkoxy, Halogen-$(C_1$-$C_2)$-alkoxy, Methoxyäthoxyäthoxy, $(C_1$-$C_4)$-Alkylamino, Di$(C_1$-$C_4)$-alkylamino, CN, $(C_1$-$C_4)$-Sulfonyl, $(C_1$-$C_4)$-Sulfoxyl, $(C_1$-$C_4)$Alkylcarbonylamino, Phenyl, Oxiranyl, und/oder Phenoxy substituiert ist, wobei letzteres ebenfalls ein- bis zweifach durch Halogen oder $(C_1$-$C_4)$-Alkyl substituiert sein kann ;

$(C_5$-$C_6)$-Cycloalkyl, das gegebenenfalls durch Halogen oder $CH_3$ substituiert ist ;

$(C_3$-$C_6)$-Alkenyl ; Halogen-$(C_3$-$C_6)$-alkenyl ;

$(C_5$-$C_6)$-Cycloalkenyl ;

$(C_3$-$C_4)$-Alkinyl, das gegebenenfalls ein- oder zweifach durch $(C_1$-$C_6)$-Alkyl, Phenyl, Halogen oder $(C_1$-$C_2)$-Alkoxy substituiert ist ;

Phenyl, das gegebenenfalls ein- bis dreifach durch $(C_1$-$C_4)$-Alkyl, $(C_1$-$C_4)$-Alkoxy, Halogen, $NO_2$ oder $CF_3$ substituiert ist ;

Furfuryl, Tetrahydrofurfuryl oder ein Rest der Formel

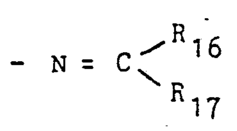, 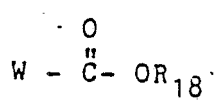 oder 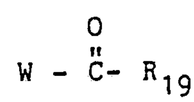

wobei

$R_{16}$ : H, $(C_1$-$C_4)$-Alkyl,

$R_{17}$ : H, $(C_1$-$C_4)$-Alkyl, $(C_2$-$C_6)$-Alkenyl, $(C_2$-$C_6)$-Alkinyl oder Phenyl,

oder beide gemeinsam eine Pentamethylenkette bilden,

W : $(C_1$-$C_3)$-Alkylen, das gegebenenfalls ein- oder zweifach durch $(C_1$-$C_4)$-Alkyl, $—COCH_3$, $COOR_{13}$ substituiert ist,

$R_{18}$ : H, $(C_1$-$C_4)$-Alkyl oder ein Kationäquivalent einer organischen oder anorganischen Base, und

$R_{19}$ : $(C_1$-$C_4)$-Alkyl

sind, bedeuten.

3. Verfahren gemäß einem oder mehreren der Ansprüche 1 und 2, dadurch gekennzeichnet, daß man auf die Pflanzen eine wirksame Menge eines Wirkstoffes gemäß Anspruch 1 einwirken läßt, wobei B die Bedeutung $—COOR_4$ hat, A eine direkte Bindung ist, Y Sauerstoff bedeutet und die übrigen Reste die genannten Bedeutungen haben.

4. Verfahren gemäß einem oder mehreren der Ansprüche 1, 2 und 3, dadurch gekennzeichnet, daß man auf die Pflanzen eine wirksame Menge eines Wirkstoffes gemäß Anspruch 1 einwirken läßt, wobei $R_1$ F, Cl, Br oder $CF_3$ und $R_2$ H oder Cl bedeuten und die übrigen Reste die genannten Bedeutungen haben.

5. Verfahren gemäß einem oder mehreren der Ansprüche 1 bis 4, dadurch gekennzeichnet, daß man einen der folgenden Wirkstoffe anwendet :

2-[4-(6-Chlor-2-benzoxazolyloxy)-phenoxy]-propionsäure-($C_1$-$C_4$)alkylester,
2-[4-(6-Chlor-2-benzthiazolyloxy)-phenoxy]-propionsäure-($C_1$-$C_4$)alkylester,
2-[4-(6-Fluor-2-benzoxazolyloxy)-phenoxy]-propionsäure-($C_1$-$C_4$)alkylester,
2-[4-(6-Trifluormethyl-2-benzthiazolyloxy)-phenoxy]-propionsäure($C_1$-$C_4$)alkylester,
2-[4-(4-Trifluormethylphenoxy)-phenoxy]-propionsäure-($C_1$-$C_4$)alkylester,
2-[4-(4-Trifluormethylphenoxy)-phenoxy]-acetonoximester,
2-[4-(3,5-Dichlor-2-pyridyloxy)-phenoxy]-propionsäure-($C_1$-$C_4$)alkylester.
2-[4-(5-Trifluormethyl-2-pyridyloxy)-phenoxy]-propionsäure-($C_1$-$C_4$)alkylester,
2-[4-(6-Fluor-2-benzthiazolyloxy)-phenoxy]-propionsäure-($C_1$-$C_4$)alkylester,
2-[4-(6-Brom-2-benzthiazolyloxy)-phenoxy]-propionsäure-($C_1$-$C_4$)alkylester,
2-[4-(6-Chlor-2-chinolinoxy)-phenoxy]-propionsäure-($C_1$-$C_4$)alkylester,
2-[4-(6-Chlor-2-chinazolinyloxy)-phenoxy]-propionsäure-($C_1$-$C_4$)alkylester,

sowie deren Natriumsalze.

6. Verfahren nach einem oder mehreren der Ansprüche 1-5, dadurch gekennzeichnet, daß man die Wirkstoffe in Form ihrer optischen D-Isomeren anwendet.

7. Verfahren gemäß einem oder mehreren der Ansprüche 1-6, dadurch gekennzeichnet, daß man Zuckerrohr, Zuckerrüben, Zuckerhirse, Weintrauben, Melonen, Obst, Kartoffeln, Mais, Klee oder Luzerne in der beanspruchten Weise behandelt.

## Claims

1. A process for increasing the carbohydrate content of plants, which comprises applying to the plants, one week to 5 months before harvesting, an effective amount of a compound of the formula

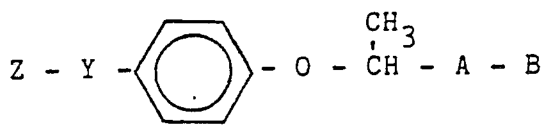

(I)

or of the salts thereof with inorganic or organic bases or the hydrates thereof ; the symbols in the formulae having the following meanings.

Z is a radical of the formulae

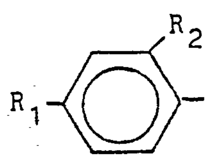

(III)

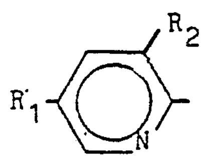

(IV)

,

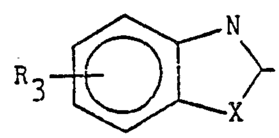

(V)

or

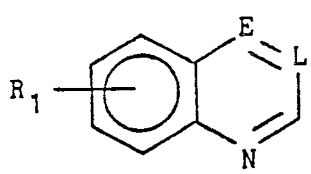

(VI)

Y is oxygen, $-CH_2-$, $-NH$ or $-N-(C_1-C_4)$-alkyl,
A is a direct bond or the groups $-CH_2-CH_2-$ or $-CH=CH-$,
B is a radical of the formulae

$-COOR_4$, $-COSR_5$, 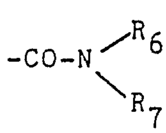 or 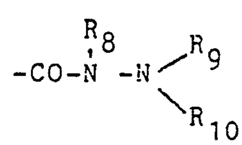

X is oxygen or sulfur,

E is CH, N or $\overset{O}{\overset{\uparrow}{N}}$,

L is CH or N,

$R_1$ is halogen, $CF_3$, $CF_2H$, $OCF_3$, CN or $NO_2$,

$R_2$ is hydrogen, F, Cl, $CF_3$, CN or $NO_2$,

$R_3$ is hydrogen, F, Cl, Br or $CF_3$,

$R_4$ is hydrogen or an aliphatic, cycloaliphatic, aromatic or heteroaromatic radical,

$R_5$ ($C_1$-$C_6$)-alkyl, ($C_3$-$C_6$)-alkenyl, benzyl, phenyl, chlorophenyl or a radical of the formula —CH($R_8$)—$COOR_{11}$,

$R_6$ is hydrogen or ($C_1$-$C_4$)-alkyl,

$R_7$ is hydrogen, ($C_1$-$C_{10}$)-alkyl, phenyl optionally mono- or disubstituted by Cl and/or $CH_3$, or is a radical of the formula —CH($R_8$)—$COOR_{11}$,

$R_6$ and $R_7$ together with the nitrogen atom form a pyrrolidine, piperidine or morpholine ring,

$R_8$ is hydrogen or $CH_3$,

$R_9$ and $R_{10}$ each are hydrogen or ($C_1$-$C_4$)-alkyl, $R_9$ is furthermore also phenyl,

$R_{11}$ is hydrogen, ($C_1$-$C_4$)-alkyl or a cation equivalent of an inorganic or organic acid, with the proviso that $R_1$ in formula III does not denote halogen.

2. The process as claimed in claim 1, which comprises applying to the plants an effective amount of a compound as in claim 1, whereby Z, $R_1$ through $R_3$ and $R_5$ through $R_{11}$ are as defined before and $R_4$ represents ($C_1$-$C_{12}$)-alkyl, optionally substituted by 1 to 3 halogen atoms, preferably F, Cl, Br, and/or OH, ($C_1$-$C_6$-alkoxy, ($C_1$-$C_4$)alkylthio, ($C_1$-$C_6$)-alkoxy-($C_2$-$C_6$)-alkoxy, halo-($C_1$-$C_2$)-alkoxy, methoxyethoxyethoxy, ($C_1$-$C_4$)alkylamino, di($C_1$-$C_4$)-alkylamino, CN, ($C_1$-$C_4$)-sulfonyl, ($C_1$-$C_4$)-sulfoxyl, ($C_1$-$C_4$)alkylcarbonylamino, phenyl, oxiranyl and/or phenoxy, the latter likewise optionally mono- or disubstituted by halogen or ($C_1$-$C_4$)alkyl ;

($C_5$-$C_6$)-cycloalkyl optionally substituted by halogen or $CH_3$ ;

($C_3$-$C_6$)-alkenyl, halo-($C_3$-$C_6$)-alkenyl ;

($C_5$-$C_6$)-cycloalkenyl ;

($C_3$-$C_4$)-alkinyl, optionally mono- or disubstituted by ($C_1$-$C_6$)-alkyl, phenyl, halogen or ($C_1$-$C_2$)-alkoxy ;

phenyl optionally mono- to trisubstituted by ($C_1$-$C_4$)-alkyl, ($C_1$-$C_4$)-alkoxy, halogen, $NO_2$ or $CF_3$ ;

furfuryl, tetrahydrofurfuryl or a radical of the formulae

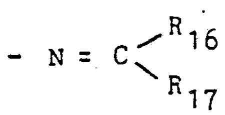 , 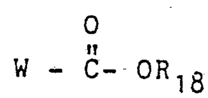 or 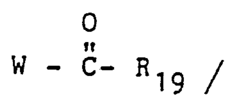 /

in which

$R_{16}$ is H or ($C_1$-$C_4$)-alkyl,

$R_{17}$ is H, ($C_1$-$C_4$)-alkyl, ($C_2$-$C_6$)-alkenyl, ($C_2$-$C_6$)-alkinyl or phenyl,

or both together form a pentamethylene chain,

W is ($C_1$-$C_3$)-alkylene optionally mono- or disubstituted by ($C_1$-$C_4$)-alkyl, —$COOH_3$, $COOR_{13}$,

$R_{18}$ is H, ($C_1$-$C_4$)-alkyl or a cation equivalent of an organic or inorganic base ; and

$R_{19}$ is ($C_1$-$C_4$)-alkyl.

3. The process according to one or both of claims 1 and 2, which comprises applying to the plants an effective amount of a compound as in claim 1, whereby B stands for the group —$COOR_4$, A is a direct bond, Y is oxygen and the other radicals are as defined before.

4. The process according to one or several of claims 1 to 3, which comprises applying to plants an effective amount of a compound as in claim 1, whereby $R_1$ is F, Cl, Br or $CF_3$ ; $R_2$ is H or Cl, and the other radicals are as defined before.

5. The process according to one or several of claims 1 to 4, wherein one of the following compounds are used :

2-[4-(6-chloro-2-benzoxazolyloxy)-phenoxy]-propionic acid-($C_1$-$C_4$)alkyl ester,
2-[4-(6-chloro-2-benzothiazolyloxy)-phenoxy]-propionic acid-($C_1$-$C_4$)alkyl ester,
2-[4-(6-fluoro-2-benzoxazolyloxy)-phenoxy]-propionic acid-($C_1$-$C_4$)alkyl ester,
2-[4-(6-trifluoromethyl-2-benzothiazolyloxy)-phenoxy]-propionic acid-($C_1$-$C_4$)alkyl ester,
2-[4-(4-trifluoromethylphenoxy)-phenoxy]-propionic acid-($C_1$-$C_4$)alkyl ester,
2-[4-(4-trifluoromethylphenoxy)-phenoxy]-acetone oxime ester,
2-[4-(3,5-dichloro-2-pyridyloxy)-phenoxy]-propionic acid-($C_1$-$C_4$)alkyl ester,
2-[4-(5-trifluoromethyl-2-pyridyloxy)-phenoxy]-propionic acid-($C_1$-$C_4$)alkyl ester,
2-[4-(6-fluoro-2-benzothiazolyloxy)-phenoxy]-propionic acid-($C_1$-$C_4$)alkyl ester
2-[4-(6-bromo-2-benzothiazolyloxy)-phenoxy]-propionic acid-($C_1$-$C_4$)alkyl ester,

2-[4-(6-chloro-2-quinolinoxy)-phenoxy]-propionic acid-($C_1$-$C_4$)alkyl ester,
2-[4-(6-chloro-2-quinazolinyloxy)-phenoxy]-propionic acid-($C_1$-$C_4$)alkyl ester,

or the sodium salts thereof.

6. The process according to one or several of claims 1 to 5, which comprises using the active compounds in the form of their optical D-isomers.

7. The process according to one or several of claims 1 to 6, which comprises treating sugar cane, sugar beets, sorgo, grapes, melons, other fruits, potatoes, corn, clover or lucerne in the manner as claimed.

**Revendications**

1. Procédé pour augmenter la teneur en glucides de plantes, caractérisé en ce que l'on fait agir sur les plantes, une semaine à 5 mois avant la récolte, une quantité efficace d'une matière active répondant à la formule I

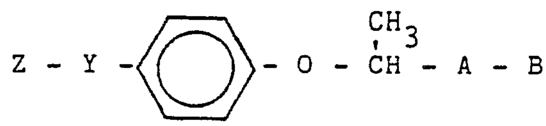
(I)

ou d'un sel de cette matière active avec une base minérale ou organique, ou d'un hydrate de cette matière active, les symboles dans cette formule ayant les significations suivantes :

Z représente un radical répondant à l'une des formules :

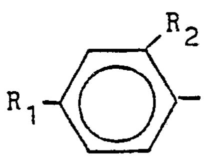
(III)

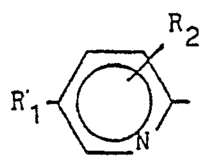
(IV)

,

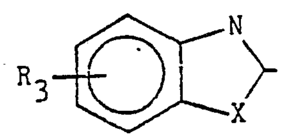
(V)

et

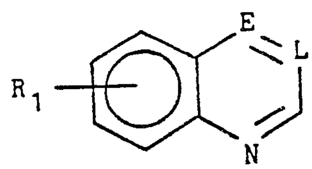
(VI)

Y représente un atome d'oxygène, un groupe $-CH_2-$, $-NH$ ou un N-alkyle en $C_1$-$C_4$,
A représente une liaison directe ou l'un des groupes $-CH_2-CH_2-$ et $-CH=CH-$,
B représente un radical répondant à l'une des formules

$-COOR_4$, $-COSR_5$, 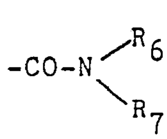 et 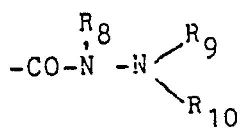

X représente un atome d'oxygène ou de soufre,
E représente un groupe CH, un atome d'azote ou un groupe $\overset{O}{\overset{\uparrow}{N}}$

L représente un groupe CH ou un atome d'azote,
$R_1$ représente un atome d'halogène, un groupe $CF_3$, $CF_2H$, $OCF_3$, CN ou $NO_2$,
$R_2$ représente un atome d'hydrogène, de fluor ou de chlore ou un groupe $CF_3$, CN ou $NO_2$,
$R_3$ représente un atome d'hydrogène, un atome de fluor, de chlore ou de brome ou un groupe $CF_3$,
$R_4$ représente un atome d'hydrogène ou un radical aliphatique, cycloaliphatique, aromatique ou hétéroaromatique,

$R_5$ représente un alkyle en $C_1$-$C_6$, un alcényle en $C_3$-$C_6$, un benzyle, phényle, chlorophényle ou un radical de formule

$$—CH(R_8)—COOR_{11},$$

$R_6$ représente un atome d'hydrogène ou un alkyle en $C_1$-$C_4$,

$R_7$ représente un atome d'hydrogène, un alkyle en $C_1$-$C_{10}$, un phényle qui peut être mono- ou disubstitué par un atome de chlore et/ou un groupe $CH_3$, ou un radical de formule $—CH(R_8)—COOR_{11}$,

$R_6$ et $R_7$ représentent, avec l'atome d'azote, un noyau de pyrrolidine, de pipéridine ou de morpholine,

$R_8$ représente un atome d'hydrogène ou un groupe $CH_3$,

$R_9$ et $R_{10}$ représentent chacun un atome d'hydrogène ou un alkyle en $C_1$-$C_4$ et $R_9$ peut en outre représenter un groupe phényle, et

$R_{11}$ représente un atome d'hydrogène, un alkyle en $C_1$-$C_4$ ou un équivalent cationique d'un acide minéral ou organique, avec la condition que $R_1$, dans la formule III, ne représente pas un halogène.

2. Procédé selon la revendication 1, caractérisé en ce que l'on fait agir sur les plantes une quantité efficace d'une matière active selon la revendication 1 dans laquelle Z, $R_1$ à $R_3$ et $R_5$ à $R_{11}$ ont les significations indiquées à la revendication 1 et $R_4$ représente : un alkyle en $C_1$-$C_{12}$ qui peut être substitué par 1 à 3 halogènes, de préférence le fluor, le chlore ou le brome, et/ou par un groupe OH, un alcoxy en $C_1$-$C_6$, un alkylthio en $C_1$-$C_4$, un ($C_1$-$C_6$)-alcoxy-($C_2$-$C_6$)-alcoxy, un halogéno ($C_1$-$C_2$)alcoxy, un méthoxy-éthoxy-éthoxy, un alkylamino en $C_1$-$C_4$, un di-($C_1$-$C_4$)alkylamino, CN, un sulfonyle en $C_1$-$C_4$, un sulfoxyle en $C_1$-$C_4$, un ($C_1$-$C_4$)alkyl-carbonylamino, un phényle, un oxirannyle, et/ou un phénoxy, ce dernier pouvant être porteur de 1 ou 2 halogènes ou de 1 ou 2 alkyles en $C_1$-$C_4$ ;

un cycloalkyle en $C_5$ ou $C_6$ qui peut être porteur d'un halogène ou d'un groupe $CH_3$ ;

un alcényle en $C_3$-$C_6$, un halogéno-($C_3$-$C_6$)alcényle,

un cycloalcényle en $C_5$ ou $C_6$ ;

un alcynyle en $C_3$ ou $C_4$ qui peut être porteur de 1 ou 2 alkyles en $C_1$-$C_6$, d'un phényle, d'un halogène ou d'un alcoxy en $C_1$ ou $C_2$ ;

un phényle qui peut être porteur d'un à trois alkyles en $C_1$-$C_4$, alcoxy en $C_1$-$C_4$, halogènes, groupes $NO_2$ ou $CF_3$ ;

un furfuryle, un tétrahydrofurfuryle ou un radical répondant à l'une des formules

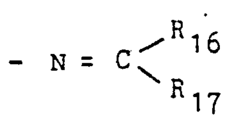 , 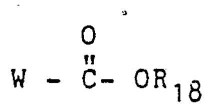 et 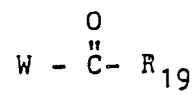

dans lesquelles :

$R_{16}$ représente H ou un alkyle en $C_1$-$C_4$,

$R_{17}$ représente H, un alkyle en $C_1$-$C_4$, un alcényle en $C_2$-$C_6$, un alcynyle en $C_2$-$C_6$ ou un phényle, ou bien

$R_{16}$ et $R_{17}$ forment ensemble une chaîne pentaméthylène,

W représente un alkylène en $C_1$-$C_3$, qui peut être mono- ou disubstitué par un alkyle en $C_1$-$C_4$, un groupe $—COCH_3$ ou $COOR_{13}$ ;

$R_{18}$ représente H, un alkyle en $C_1$-$C_4$ ou un équivalent cationique d'une base organique ou minérale, et

$R_{19}$ représente un alkyle en $C_1$-$C_4$.

3. Procédé selon l'une des revendications 1 et 2, caractérisé en ce que l'on fait agir sur les plantes une quantité efficace d'une matière active selon la revendication 1 dans laquelle B représente un groupe $—COOR_4$, A une liaison directe, Y un atome d'oxygène et les autres symboles ont les significations indiquées.

4. Procédé selon l'une quelconque des revendications 1 à 3, caractérisé en ce que l'on fait agir sur les plantes une quantité efficace d'une matière active selon la revendication 1 dans laquelle $R_1$ représente le fluor, le chlore, le brome ou un groupe $CF_3$, $R_2$ représente un atome d'hydrogène ou de chlore et les autres symboles ont les significations indiquées.

5. Procédé selon l'une quelconque des revendications 1 à 4, caractérisé en ce que l'on emploie l'une des matières actives ci-dessous :

le 2-[4-(6-chloro-2-benzoxazolyloxy)-phénoxy]-propionate d'un alkyle en $C_1$-$C_4$,
le 2-[4-(6-chloro-2-benzothiazolyloxy)-phénoxy]-propionate d'un alkyle en $C_1$-$C_4$,
le 2-[4-(6-fluoro-2-benzoxazolyloxy)-phénoxy]-propionate d'un alkyle en $C_1$-$C_4$,
le 2-[4-(6-trifluorométhyl-2-benzothiazolyloxy)-phénoxy] propionate d'un alkyle en $C_1$-$C_4$,
le 2-[4-(4-trifluorométhylphénoxy)-phénoxy]-propionate d'un alkyle en $C_1$-$C_4$,
le 2-[4-(4-trifluorométhylphénoxy)-phénoxy]-acétooxime-ester,
le 2-[4-(3,5-dichloro-2-pyridyloxy)-phénoxy]-propionate d'un alkyle en $C_1$-$C_4$,

le 2-[4-(5-trifluorométhyl-2-pyridyloxy)-phénoxy]-propionate d'un alkyle en $C_1$-$C_4$,
le 2-[4-(6-fluoro-2-benzothiazolyloxy)-phénoxy]-propionate d'un alkyle en $C_1$-$C_4$,
le 2-[4-(6-bromo-2-benzothiazolyloxy)-phénoxy]-propionate d'un alkyle en $C_1$-$C_4$,
le 2-[4-(6-chloro-2-quinoléinyloxy)-phénoxy]-propionate d'un alkyle en $C_1$-$C_4$,
le 2-[4-(6-chloro-2-quinazoléinyloxy)-phénoxy]-propionate d'un alkyle en $C_1$-$C_4$,

et leurs sels de sodium.

6. Procédé selon l'une quelconque des revendications 1 à 5, caractérisé en ce que l'on emploie les matières actives sous la forme de leurs isomères D optiques.

7. Procédé selon l'une quelconque des revendications 1 à 6, caractérisé en ce que l'on traite de la canne à sucre, de la betterave sucrière, du sorgho dou, des grappes de raisins, des melons, des fruits, de la pomme de terre, du maïs, du trèfle ou de la luzerne.